# EUROPÄISCHE PATENTSCHRIFT

(11) **EP 1 900 483 B1**
(45) Veröffentlichungstag und Bekanntmachung des Hinweises auf die Patenterteilung: **11.03.2009**
(21) Anmeldenummer: 07016882.8
(22) Anmeldetag: 29.08.2007
(51) Int. Cl.: B25B 27/30, F16F 1/12

(54) **Vorspanneinrichtung zum Vorspannen einer Schraubenfelder**
Device for pre-stressing a coil spring
Dispositif pour précontraindre un ressort hélicoidal

(30) Priorität: 12.09.2006 DE 202006014178 U
(43) Veröffentlichungstag der Anmeldung: 19.03.2008
(73) Patentinhaber: Klann Spezial-Werkzeugbau GmbH, 78166 Donaueschingen (DE)
(72) Erfinder: Sjösten, Thomas, 78166 Donaueschingen (DE); Baur, Stefan, 78166 Donaueschingen/Pfohren (DE)
(74) Vertreter: Neymeyer, Franz

(56) Entgegenhaltungen:
- EP-A- 1 033 206
- DE-B3- 10 361 597

## Beschreibung

Die Erfindung betrifft eine Vorspanneinrichtung zum Vorspannen einer Schraubenfeder, bestehend aus zwei im Abstand voneinander angeordneten und feststehend miteinander in Verbindung stehenden Spannplatten, von welchen die erste Spannplatte mit einer Federaufnahme zur Aufnahme der ersten Endwindung der Schraubenfeder versehen ist, und von welchen die zweite Spannplatte eine Presseinrichtung aufweist, welche mit einer axial verstellbaren, eine Federaufnahme aufweisenden Druckplatte zur Aufnahme der zweiten Endwindung der Schraubenfeder versehen ist, wobei die Druckplatte durch die Presseinrichtung relativ zur ersten Spannplatte verstellbar ist.

Aus der DE 103 61 597 B3 ist ein System zum Spannen einer Schraubenfeder bekannt, bei welcher zum Vorspannen einer Schraubenfeder eine Vorspanneinrichtung der gattungsgemäßen Art eingesetzt wird. Dieses System zum Spannen einer Schraubenfeder besteht aus zwei in Kombination miteinander einzusetzenden Spannvorrichtungen, von welchen die eine einen herkömmlichen Federspanner darstellt. Dieser Federspanner weist zwei Druckplatten mit jeweils einem Durchbruch auf, welcher zum vollständigen Spannen "auf Block" einer Schraubenfeder vorgesehen ist. Bei dieser speziellen Konstruktion des Federspanners der ein äußerst kurzes Teleskop-Spanngerät aufweist, ist es jedoch nicht möglich, eine mit diesem Federspanner im Fahrzeug auf Block gespannte Schraubenfeder außerhalb des Fahrzeuges wieder vollständig zu entspannen. Dies deshalb, weil im Einsatz am Fahrzeug das teleskopartig ausgebildete Spanngerät, wie dieses in der genannten Druckschrift beschrieben ist, nicht mit einer genügend großen Gesamtlänge ausgestattet werden kann, da ansonsten dieses Spanngerät am Fahrzeug nicht einsetzbar wäre. Die weitere genaue Ausgestaltung des eigentlichen Federspanners ist der DE 103 61 597 B3 im Detail entnehmbar, so dass an dieser Stelle explizit auf diese Druckschrift bezüglich der Ausgestaltung dieses Federspanners verwiesen wird.

Um nun eine mittels dieses Federspanners auf Block gespannte Schraubenfeder vollständig entspannen zu können und auch um eine Schraubenfeder mit einem solchen "zu kurzen" Federspanner auf Block spannen zu können, wird beim Gegenstand der genannten DE-Schrift eine Vorspanneinrichtung eingesetzt. Diese Vorspanneinrichtung weist eine erste Spannplatte auf, welche bei dem dort dargestellten Ausführungsbeispiel über drei Stützstangen starr mit einer zweiten Stützplatte in Verbindung steht. Die beiden Stützplatten verlaufen in ihrem montierten Zustand im wesentlichen parallel zueinander. In der zweiten Stützplatte ist eine Pressvorrichtung in Form eines Hydraulikzylinders vorgesehen, welcher austauschbar mit dieser Stützplatte in Verbindung steht. Dieser Hydraulikzylinder ist mit einer axial verstellbaren Kolbenstange versehen, welche bei Aktivierung des Hydraulikzylinders eine Stellbewegung zur ersten Spannplatte hin ausführt. Zur Aufnahme der Endwindung einer zu spannenden Schraubenfeder ist die Kolbenstange an ihrem freien Ende mit einer scheibenförmigen Druckplatte versehen, welche bei dem dargestellten Ausführungsbeispiel als Kreisscheibe ausgebildet ist. Im Betrieb wird eine vorzuspannende Schraubenfeder zwischen dieser Druckplatte des Hydraulikzylinders und der ersten Spannplatte aufgenommen. Die Schraubenfeder liegt dabei mit ihrer einen Endwindung an der Druckplatte des Hydraulikzylinders und mit ihrer anderen Endwindung an der Spannplatte der genannten Vorspanneinrichtung an. Dabei ist zur zentrierten Aufnahme der einen Endwindung die Druckplatte des Hydraulikzylinders mit einer Zentrierscheibe versehen, welche auswechselbar mit der Druckplatte in Verbindung steht. Diese Zentrierscheibe ist mit einem zentralen Zentrierdom versehen, dessen Durchmesser an den Durchmesser der aufzunehmenden Endwindung der zu spannenden Schraubenfeder angepasst ist, so dass diese im Wesentlichen konzentrisch zur Zentrierscheibe ausgerichtet aufgenommen wird. Des Weiteren weist diese Druckplatte des Hydraulikzylinders in ihrem radial äußeren Randbereich eine sogenannte Markierungsplatte auf, welche auswechselbar an der Druckplatte befestigt ist. Im montierten Zustand ragt diese Markierungsplatte radial nach oben über die Druckplatte des Hydraulikzylinders hinaus. Des Weiteren ist im radial äußeren Bereich dieser Markierungsplatte eine Durchgangsbohrung vorgesehen, mittels welcher die Markierungsplatte an einer der Stützstangen der beiden Spannplatten axial verschiebbar geführt ist. Durch diese Markierungsplatte ist in Zusammenwirken mit einer Markierung an der Stützstange ein vorbestimmter Spannweg festlegbar, welcher benötigt wird, um die Schraubenfeder genügend vorzuspannen, um in einem zweiten Arbeitsschritt zum vollständigen Spannen dieser Schraubenfeder auf Block den oben bereits erwähnten Federspanner ansetzen zu können.

Zur Aufnahme der zweiten Federwindung ist die erste Spannplatte mit einem Zentrierdom versehen, welcher eine Durchgangsbohrung aufweist. Durch diese Durchgangsbohrung ist im Betrieb der Spindelkopf des eigentlichen Federspanners in seinem angesetzten Zustand mittels eines entsprechenden Schlüsselwerkzeuges zugänglich. Des Weiteren ist am Zentrierdom der ersten Spannplatte ein radial zur Längsmittelachse des Zentrierdoms verlaufender und axial vorstehender Anschlagsteg vorgesehen. Durch diesen Anschlagsteg ist eine zu spannenden Schraubenfeder in einer vordefinierten Winkelausrichtung der Schraubenfeder relativ zur Vorspanneinrichtung ausrichtbar. Das heißt, dass die Endwindung mit ihrem Ende in korrekt angesetztem Zustand an diesem Anschlag anliegt und ausgehend von diesem Anschlag den Zentrierdom zumindest über einen Umfangswinkel umschließt, welcher es gestattet, diese Endwindung im Wesentlichen konzentrisch zum Zentrierdom auszurichten. Eine solche Winkelausrichtung bezüglich der Spannplatte ist insbesondere zum Spannen von Schraubenfedern notwendig, welche in einem Kraftfahrzeug gebogen verlaufend einzusetzen sind. Dabei muss der Federspanner, welcher nach dem Vorspannen in die Schraubenfeder einzusetzen ist, derart an der Schraubenfeder angesetzt werden, dass dessen vorhandene Führungselemente bei der späteren Montage der Schraubenfeder im Kraftfahrzeug auf der Krümmungsaußenseite der Schraubenfeder angeordnet sind. Bezüglich dieses Ansetzens des eigentlichen Federspanners wird an dieser Stelle ebenfalls auf die oben genannte DE-Schrift verwiesen.

Es sind nun Achskonstruktionen bekannt geworden, bei welchen unterschiedlich dimensionierte, jedoch mit gleicher Federkennlinie ausgestattete Schraubenfedern für das gleiche Fahrzeug eingesetzt werden. Dies kann wiederum zur Folge haben, dass die Endwindungen in unterschiedlicher Art und Weise im eingesetzten Zustand bezüglich der Kraftfahrzeugachse und der Kraftfahrzeugkarosserie auszurichten sind. Eine solche Ausrichtmöglichkeit ist mit der aus der DE-Schrift bekannten Vorspanneinrichtung nicht erreichbar. Des Weiteren ist die bekannte Vorspannvorrichtung bezüglich dieser Winkelausrichtung auch nur für ganz bestimmte Achskonstruktionen und geometrische Gegebenheiten bezüglich des Federeinbaus einsetzbar. Auch können mit der bekannten Vorspanneinrichtung nur Schraubenfedern bestimmter Länge vorgespannt werden.

Demgemäß liegt der Erfindung die Aufgabe zugrunde, eine Vorspanneinrichtung der gattungsgemäßen Art derart variabel auszugestalten, dass insbesondere bezüglich ihrer Winkelausrichtung unterschiedliche Schraubenfedern mit unterschiedlichen, vorbestimmten Winkelausrichtungen in einer vorbestimmten Winkellage durch die Vorspanneinrichtung aufnehmbar sind.

Die Aufgabe wird erfindungsgemäß zusammen mit den Merkmalen des Anspruches 1 dadurch gelöst, dass wenigstens eine der Federaufnahmen einen Anschlag aufweist, durch welchen ein Federende einer Endwindung der Schraubenfeder in einer bestimmten Winkelausrichtung in der Federaufnahme aufnehmbar ist und, dass die Federaufnahme in unterschiedlichen Winkelstellungen relativ zur Vorspanneinrichtung ausrichtbar und unverdrehbar fixierbar ist.

Durch die erfindungsgemäße Ausgestaltung der Vorspanneinrichtung wird eine Vorrichtung zur Verfügung gestellt, in welcher Schraubenfedern unterschiedlicher Federgeometrie in unterschiedlichen Winkellagen aufnehmbar sind, so dass an die in der Vorspanneinrichtung vorgespannte Schraubenfeder ein Federspanner in einer zum späteren Einbau der Schraubenfeder in ein Kraftfahrzeug in einer vordefinierten Winkelposition korrekt ansetzbar ist.

Weitere vorteilhafte Ausgestaltungen der Erfindung sind den weiteren Unteransprüchen zu entnehmen.

So kann gemäß Anspruch 2 vorgesehen sein, dass die Federaufnahme der ersten Spannplatte als Stützscheibe ausgebildet ist und einen zentralen Zentrierdom aufweist, an welchem die Endwindung der Schraubenfeder ansetzbar ist.

Weiter kann gemäß Anspruch 3 zur präzisen Aufnahme der Endwindung einer Schraubenfeder vorgesehen sein, dass der Anschlag radial verlaufend an den Zentrierdom angeformt ist.

Gemäß Anspruch 4 kann vorgesehen sein, dass die Stützscheibe eine zentrale Durchgangsbohrung aufweist. Durch diese Durchgangsbohrung ist beispielsweise der Antrieb des an der vorgespannten Schraubenfeder anzusetzenden Federspanners von außen zugänglich.

Gemäß Anspruch 5 kann vorgesehen sein, dass die Stützscheibe über eine feststehend mit der ersten Spannplatte verbindbare Tragscheibe an der ersten Spannplatte auswechselbar montiert ist.

Gemäß Anspruch 6 kann vorgesehen sein, dass die Tragscheibe mehrere kreisförmig angeordnete Innengewinde aufweist über welche die Stützscheibe in unterschiedlichen Winkelstellungen mit der Tragscheibe verschraubbar ist. Durch diese Ausgestaltung ist die Stützscheibe in einfacher Weise in unterschiedlichen, vordefinierten Winkelpositionen relativ zur ersten Spannplatte über die Tragscheibe anordenbar.

Gemäß Anspruch 7 kann vorgesehen sein, dass wenigstens zwei der Innengewinde als Durchgangsgewinde ausgebildet sind und zur lösbaren Befestigung der Tragscheibe an der ersten Spannplatte dienen. Durch diese Ausgestaltung wird die Herstellung und Montage der Tragscheibe sowie der Stützscheibe vereinfacht.

Durch die Ausgestaltung nach Anspruch 8 wird ein präzises Vorspannen einer Schraubenfeder sichergestellt. Dazu ist vorgesehen, dass die Spannplatten über Stützstangen parallel zueinander verlaufend und im Abstand voneinander miteinander verbunden sind.

Durch die Ausgestaltung gemäß Anspruch 9 ist die Vorspanneinrichtung insbesondere an Schraubenfeder unterschiedlicher Länge einfach anpassbar. Dazu ist vorgesehen, dass die Stützstangen zur Einstellung des Abstandes der beiden Spannplatten mit Distanzhülsen versehen sind.

Nachfolgend wird anhand der Zeichnung ein Ausführungsbeispiel des Erfindungsgegenstandes näher erläutert. Diese Erläuterungen dienen lediglich zum besseren Verständnis der Erfindung, wobei einzelne explizit dargestellte Merkmale nicht als Beschränkung zu verstehen sind. Es zeigt:
- Fig. 1: eine perspektivische Explosionsdarstellung einer erfindungsgemäßen Vorspanneinrichtung mit einer ersten und einer zweiten Spannplatte, welche beim vorliegenden Ausführungsbeispiel über insgesamt drei Stützstangen miteinander starr verbunden sind;
- Fig. 2: die erste Spannplatte aus Fig. 1 in einer perspektivischen Frontansicht zusammen mit einer Tragscheibe sowie einer Stützscheibe;
- Fig. 3: die Stützscheibe aus Fig. 2 in einer beispielhaft um 90° gedrehten Ausrichtung in perspektivischer Darstellung;
- Fig. 4: die Spannplatte, die Tragscheibe sowie die Stützscheibe aus Fig. 2 in ihrem montierten Zustand zusammen mit einer aufgenommenen Endwindung einer Schraubenfeder;
- Fig. 5: eine perspektivische Explosionsdarstellung einer Ausführungsform einer Stützstange zur Verbindung der beiden Spannplatten aus Fig. 1 zusammen mit mehreren Distanzhülsen;
- Fig. 6: die montierte Vorspanneinrichtung zusammen mit einer in Phantomlinien dargestellten, vorzuspannenden Schraubenfeder in einem verkürzten Vertikalschnitt.

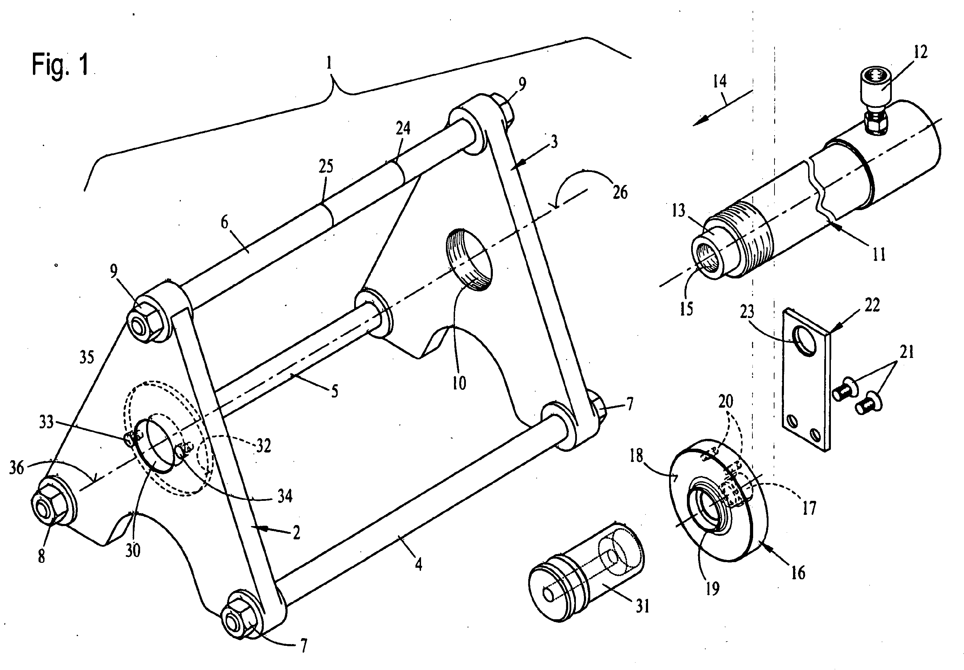

Fig. 1 zeigt eine erfindungsgemäße Vorspanneinrichtung 1, welche beim vorliegenden Ausführungsbeispiel aus einer ersten Spannplatte 2 und einer zweiten Spannplatte 3 besteht. Die Spannplatten 2 und 3 sind beispielhaft über insgesamt drei Stützstangen 4, 5 und 6 feststehend miteinander verbunden. Beim vorliegenden Ausführungsbeispiel sind die beiden Spannplatten 2 und 3 etwa dreieckförmig ausgebildet und nehmen die Stützstangen 4, 5 und 6 in ihren Eckbereichen auf. Zur feststehenden Montage der Stützstangen 4 bis 6 sind jeweils entsprechende Montagemuttern 7, 8 bzw. 9 vorgesehen.

Wie aus Fig. 1 ersichtlich ist, weist die zweite Spannplatte 3 ein zentrales Durchgangsgewinde 10 auf, welches zur auswechselbaren Aufnahme einer Presseinrichtung vorgesehen ist. Diese Presseinrichtung besteht beim vorliegenden Ausführungsbeispiel aus einem Hydraulikzylinder 11, welcher mit einem Druckanschluss 12 versehen ist, über welchen der Hydraulikzylinder 11 aktivierbar ist. Bei Aktivierung dieses Hydraulikzylinders 11 wird dessen Kolbenstange 13 in Richtung des Pfeiles 14 bewegt, so dass mittels dieser Stellbewegung ein Spannvorgang eingeleitet werden kann. Die Kolbenstange 13 weist beim vorliegenden Ausführungsbeispiel ein zentrales Innengewinde 15 auf, über welches eine Druckplatte 16 mit der Kolbenstange 13 koppelbar ist. Zu diesem Zweck weist die Druckplatte 16 zur Kolbenstange 13 hin einen axial vorstehenden Gewindezapfen 17 auf.

Des Weiteren ist die Druckplatte 16 auf ihrer dem Gewindezapfen 17 gegenüberliegenden Druckfläche 18 mit einem zentralen, etwa ringförmig ausgebildeten Zentrierdom 19 versehen, über welchen im Einsatz eine Endwindung einer vorzuspannenden Schraubenfeder sicher aufnehmbar ist. Anstatt einer solchen "Innenführung" könnte auch eine Außenführung vorgesehen sein.

Des Weiteren ist aus Fig. 1 ersichtlich, dass die Druckplatte 16 rückseitig, d. h. benachbart zu ihrem Gewindezapfen 17, in ihrem oberen Kantenbereich zwei Innengewinde 20 aufweist, in welche zwei Montageschrauben 21 einschraubbar sind. Diese Montageschrauben 21 dienen beim vorliegenden Ausführungsbeispiel zur feststehenden Montage einer Führungsplatte 22, welche in ihrem oberen Endbereich mit einer Führungsbohrung 23 versehen ist. Mit dieser Führungsbohrung 23 ist die Führungsplatte 22 im Betrieb an der oberen Stützstange 6 verschiebbar gelagert. Diese Führungsstange 6 kann mehrere, insbesondere zwei Strichmarkierungen 24 und 25 aufweisen, durch welche vorbestimmte Stellwege der Druckplatte 16 zusammen mit der Führungsplatte 22 erkennbar markiert sind.

Des Weiteren ist aus Fig. 1 ersichtlich, dass die Spannplatte 2 beim vorliegenden Ausführungsbeispiel eine zentrale Durchgangsbohrung 30 aufweist, welche zum Hindurchführen einer Zentrierhülse 31 vorgesehen ist.

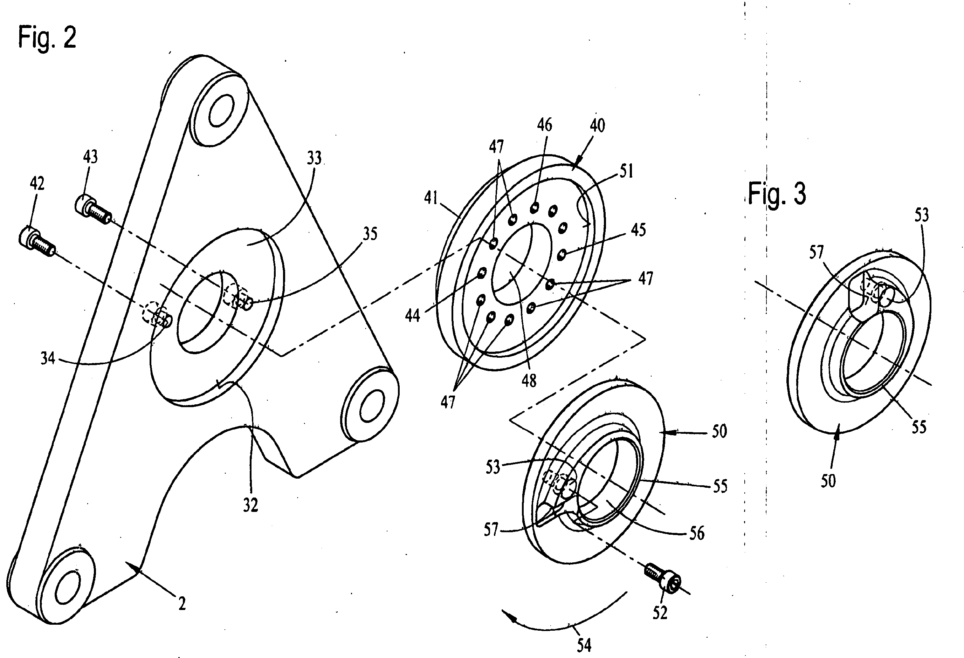

Zur zweiten Spannplatte 3 hin ist die erste Spannplatte 2 im Umgebungsbereich der zentralen Durchgangsbohrung 30 mit einer kreisrunden Einsenkung 32 versehen, welche bezüglich der Durchgangsbohrung 30 radial erweitert ausgebildet ist und eine ringförmige Anlagefläche 33 bildet. Im Bereich dieser Anlagefläche 33 sind beim vorliegenden Ausführungsbeispiel zwei sich diametral gegenüberliegende Montagebohrungen 34 und 35 vorgesehen, welche zur feststehenden Montage einer Tragscheibe 40 dienen, wie diese in Fig. 2 beispielhaft dargestellt ist.

Weiter ist aus Fig. 1 ersichtlich, dass die zentrale Durchgangsbohrung 30 der ersten Spannplatte 2 mit ihrer Längsmittelachse 36 konzentrisch zur Längsmittelachse 26 des Durchgangsgewindes 10 der zweiten Spannplatte 3 ausgerichtet ist, so dass die an der Kolbenstange 13 feststehend montierte Druckplatte 16 mit ihrem Zentrierdom 19 bei an der zweiten Spannplatte 3 montiertem Hydraulikzylinder 11 ebenfalls konzentrisch zur Längsmittelachse 26 des Durchgangsgewindes 11 sowie zur Längsmittelachse 36 der zentralen Durchgangsbohrung 30 angeordnet ist. Dies hat wiederum zur Folge, dass auch die Tragscheibe 40, welche passend mit einem Zentrieransatz 41 in die Einsenkung 32 der ersten Spannplatte 2 einsetzbar ist, ebenfalls konzentrisch zur Druckplatte 16 ausgerichtet ist.

Zur Montage der Tragscheibe 40, welche im montierten Zustand flächig auf der Anlagefläche 33 der Einsenkung 32 der ersten Spannplatte 2 anliegt, sind beim vorliegenden Ausführungsbeispiel zwei Montageschrauben 42 und 43 vorgesehen (Fig. 2), welche dementsprechend durch die beiden Montagebohrungen 34 und 35 der ersten Spannplatte 2 hindurch steckbar sind.

Des Weiteren weist die Tragscheibe 40 mehrere, gleichmäßig am Umfang verteilte Durchgangsgewinde 44, 45, 46 und 47 auf, von welchen die beiden Durchgangsgewinde 44 und 45 zur feststehenden Montage der Tragscheibe 40 an der ersten Spannplatte 2 vorgesehen sind.

Diese Durchgangsgewinde 44 und 45 sowie die weiteren Durchgangsgewinde 46 und 47 dienen zur Montage einer Stützscheibe 50, welche wiederum passend in eine Einsenkung 51 der Tragscheibe 40 einsetzbar ist. Zur festsitzenden Montage der Stützscheibe 50 an der Tragscheibe 40 ist eine weitere Montageschraube 52 vorgesehen, welche durch eine Durchgangsbohrung 53 der Stützscheibe 50 hindurch steckbar und wahlweise in eines der Durchgangsgewinde 44 bis 47 einschraubbar ist.

In der dargestellten Winkelausrichtung der Stützscheibe 50 ist diese mit ihrer Durchgangsbohrung 53 auf das Durchgangsgewinde 44 der Tragscheibe 40 ausgerichtet. Durch entsprechende Drehung der Stützscheibe 50 in Richtung des Pfeiles 54 und Ausrichtung der Stützscheibe 50 mit ihrer Durchgangsbohrung 53 auf eines der Durchgangsgewinde 44 bis 47 ist die Stützscheibe 50 in entsprechenden Winkelstellungen wahlweise an der Tragscheibe 40 feststehend montierbar.

Diese Stützscheibe 50 dient zur Aufnahme einer Endwindung einer Schraubenfeder und weist hierzu einen zentralen Zentrierdom 55 auf, innerhalb welchem eine zentrale Durchgangsbohrung 56 vorgesehen ist. Diese Durchgangsbohrung 56 dient beim vorliegenden Ausführungsbeispiel, ebenso wie die Durchgangsbohrung 48 der Tragscheibe 40, zur Durchführung der in Fig. 1 dargestellten Zentrierhülse 31.

Des Weiteren ist aus Fig. 2 ersichtlich, dass im Umfangsbereich des Zentrierdomes 55 ein radial verlaufender, axial nach vorne stehender Anschlag 57 vorgesehen ist. Dieser Anschlag 57 dient zur Winkelausrichtung einer aufgenommenen Endwindung einer Schraubenfeder und ist somit zur Winkelausrichtung der gesamten Schraubenfeder vorgesehen. Durch entsprechende Einstellung der Winkelstellung der Stützscheibe 50 in Verbindung mit den Durchgangsgewinden 44 bis 47 der Tragscheibe 40 ist eine Schraubenfeder entsprechend der vorherrschenden Einbaubedingungen in einem Kraftfahrzeug in ihrer Winkelstellung in der Vorspanneinrichtung 1 ausrichtbar.

So zeigt Fig. 3 beispielhaft die Stützscheibe 50 mit ihrem Zentrierdom 55 und ihrem Anschlag 57 in einer in Richtung des Pfeiles 54 (Fig. 2) um 90° gedrehten Position. In dieser gedrehten Winkellage der Stützscheibe 50 ist deren Durchgangsbohrung 53 beispielsweise auf das Durchgangsgewinde 46 der Tragscheibe 40 ausgerichtet, so dass dementsprechend deren Montageschraube 52 mit diesem Durchgangsgewinde 46 in Eingriff bringbar ist.

Es ist erkennbar, dass in Abhängigkeit von der Anzahl und Winkellage der Durchgangsgewinde 44 bis 47 die Stützscheibe 50 in unterschiedlichen Winkelstellungen mit ihrem Anschlag 57 an der Tragscheibe 40 montierbar ist. Dementsprechend sind auch vorzuspannende Schraubenfedern mit ihren Endwindungen entsprechend in eine vorbestimmte Winkelstellung für eine spätere Montage in einem Kraftfahrzeug ausrichtbar.

Eine solche Ausrichtung kann insbesondere bei gebogen in einem Kraftfahrzeug einzubauende Schraubenfedern von Bedeutung sein, wie dies bereits in der in der Beschreibungseinleitung genannten DE 103 61 597 B3 im Zusammenhang mit einem Federspanner beschrieben ist. Dieser Federspanner dient dabei nach Vorspannung einer derartigen Schraubenfeder durch die Vorspanneinrichtung 1 zum vollständigen Spannen einer Schraubenfeder zum Zwecke des späteren Einbaus in ein Kraftfahrzeug.

Ein solcher Anschlag 57 könnte wahlweise auch an der Druckplatte 16 mit ihrem Zentrierdom 19 als Federaufnahme vorgesehen sein. Die Winkelausrichtung der Druckplatte 16 und deren entsprechende Fixierung könnte in diesem Fall durch unterschiedliche Anordnungen der Führungsplatte 22 an der Druckplatte 16 in unterschiedlichen Winkelstellungen erfolgen.

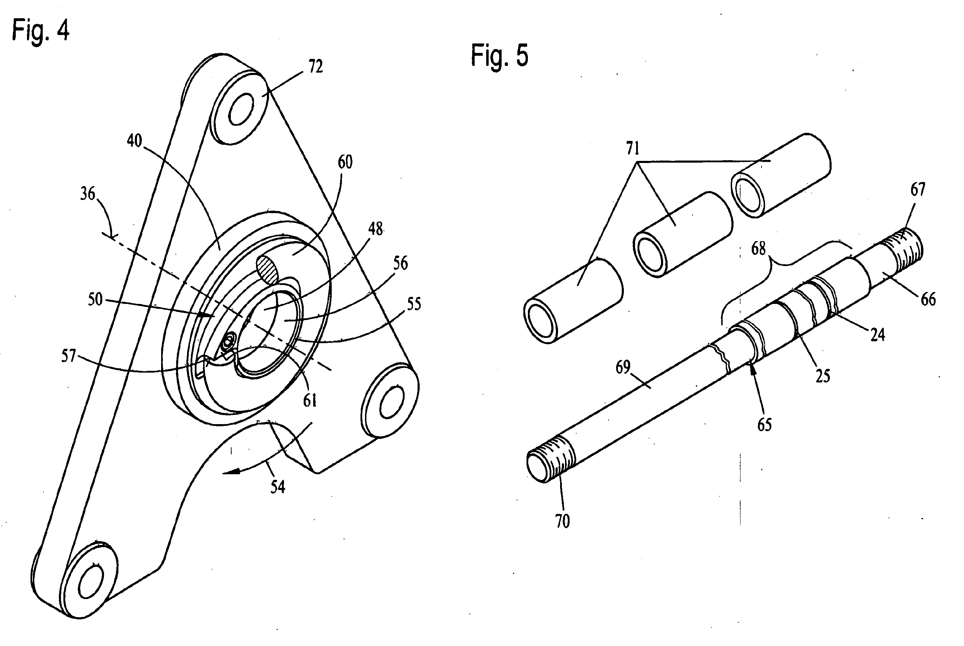

Fig. 4 zeigt die erste Spannplatte 2 mit der montierten Tragscheibe 40 sowie mit der in diese eingesetzten Stützscheibe 50. Die Tragscheibe 40 ist konzentrisch zur Längsmittelachse 36 der zentralen Durchgangsbohrung 30 (Fig. 1) eingesetzt und nimmt ebenfalls konzentrisch zu dieser Längsmittelachse 36 die Stützscheibe 50 auf. Dabei ist in Fig. 4 erkennbar, dass die Tragscheibe 40 und die Stützscheibe 50 mit ihren Durchgangsbohrungen 48 und 56 axial direkt hintereinander liegen.

Auf den Zentrierdom 55 ist eine Endwindung 60 einer in Fig. 4 nicht weiter dargestellten Schraubenfeder aufgesetzt, so dass diese Endwindung 60 ebenfalls im Wesentlichen konzentrisch zur Längsmittelachse 36 ausgerichtet ist. Dabei wird in der dargestellten aufgenommenen Position der Endwindung 60 diese soweit in Richtung des Pfeiles 54 gedreht, bis diese mit ihrem Federende 61 am Anschlag 57 der Stützscheibe 50 bzw. des Zentrierdomes 55 anliegt. Durch diese einfache Ausgestaltung ist somit in einfacher Weise eine Winkelausrichtung in eine gewünschte Winkelposition einer Schraubenfeder sicher erreichbar.

Fig. 5 zeigt eine Ausführungsvariante einer Stützstange 65, welche in ihrem rechten, hinteren Abschnitt einen radial verjüngten Montagezapfen 66 bildet, über welchen die Stützstange 65 wahlweise mit der ersten Spannplatte 2 oder der zweiten Spannplatte 3 koppelbar ist. An diesem Montagezapfen 66 schließt sich axial nach außen ein entsprechendes Montagegewinde 67 an, auf welches eine der Montagemuttern 7 bis 9 zur feststehenden Montage der Stützstange 65 beispielsweise an der zweiten Spannplatte 3 aus Fig. 1 aufschraubbar ist.

Beim vorliegenden Ausführungsbeispiel bildet die Stützstange 65 in ihrem dem Montagegewinde 67 gegenüberliegenden, sich an den Montagezapfen 66 anschließenden Bereich einen Führungsabschnitt 68, welcher beispielsweise mit den beiden Strichmarkierungen 24 und 25 versehen sein kann, wie diese bereits zu Fig. 1 für die Stützstange 6 beschrieben wurden. Dieser Führungsabschnitt 68 dient zur verschiebbaren Aufnahme der Führungsbohrung 23 der Führungsplatte 22 aus Fig. 1. Dabei ist die Gesamtlänge des Führungsabschnittes 68, welcher in Fig. 5 verkürzt dargestellt ist, derart gewählt, dass diese im wesentlichen einem vollständigen Spannhub der Kolbenstange 13 zusammen mit der Druckplatte 16 entspricht und somit auch die Führungsplatte 22 mit ihrer Führungsbohrung 23 zumindest annähernd über den gesamten Bereich des Führungsabschnittes 68 verstellbar ist.

An diesen Führungsabschnitt 68 schließt sich wiederum ein radial verjüngter Aufnahmeabschnitt 69 an, an dessen freiem Ende ein zweites Montagegewinde 70 vorgesehen ist, auf welches eine der Montagemuttern 7 bis 9 aufschraubbar ist. Zur Positionierung beispielsweise der ersten Spannplatte 2 auf diesem Aufnahmeabschnitt 69 sind mehrere gleich lange oder unterschiedlich lange Distanzhülsen 71 vorgesehen, welche wahlweise auf den Führungsabschnitt 68 der Stützstange 65 aufschiebbar sind. Die axiale Länge dieser Distanzhülsen 71 sowie ihre Anzahl ist dabei auf die Dicke eines Montageauges 72 (Fig. 4) beispielsweise der ersten Spannplatte 2 derart abgestimmt, dass ein Verspannen bzw. festsitzender Halt der ersten Spannplatte 2 über eine der Montagemuttern 7 bis 9 in einer vorbestimmten Position zwischen zwei Distanzhülsen 71 oder zwischen der äußersten Distanzhülse 71 und der Montagemutter 7 bis 9 sicher gewährleistet ist.

Somit ist durch die beispielhaft dargestellte Ausgestaltung der Stützstange 65, von welchen beim vorliegenden Ausführungsbeispiel insgesamt drei Stück vorzusehen sind, der Abstand der beiden parallel zueinander verlaufenden ersten Spannplatte 2 und zweiten Spannplatte 3 stufenweise einstellbar. Durch diese Ausgestaltung ist es somit sicher möglich, die gesamte Vorspanneinrichtung 1 an die Länge einer vorzuspannenden Schraubenfeder anzupassen.

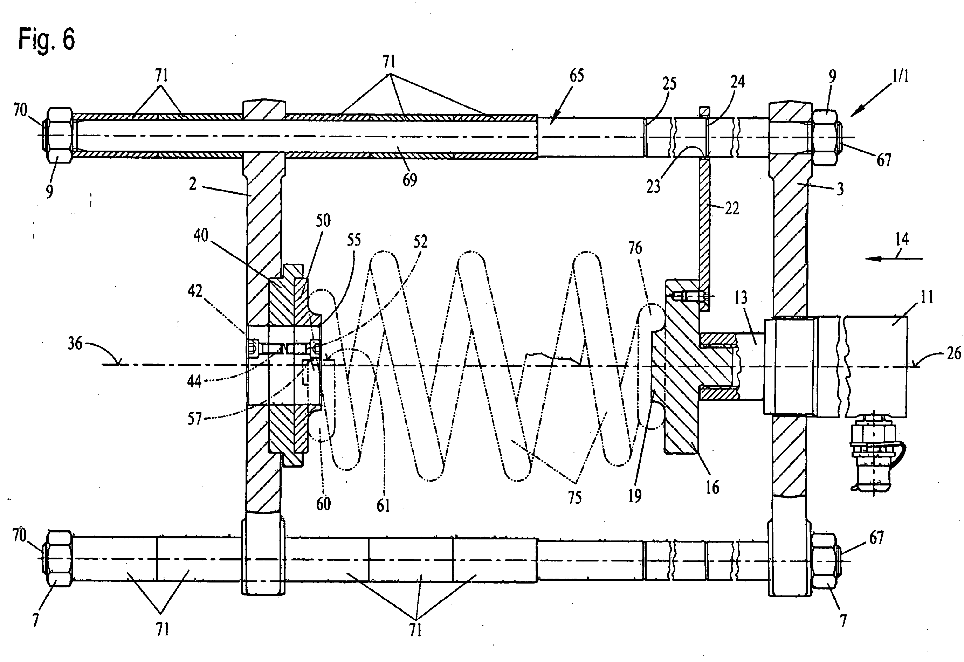

Fig. 6 zeigt hierzu eine Vorspanneinrichtung 1/1, bei welcher Stützstangen 65 aus Fig. 5 mit ihren Distanzhülsen 71 eingesetzt sind. Auf der rechten Seite ist erkennbar, dass auf die Montagegewinde 67 jeweils eine Montagemutter 7 bzw. 9 aufgeschraubt ist und die zweite Spannplatte 3 somit feststehend an den Stützstangen 65 gehalten ist. Die Führungsplatte 22 steht verschiebbar mit der oberen Stützstange 65 über ihre Führungsbohrung 23 in Verbindung. Der Hydraulikzylinder 11 ist in die zweite Spannplatte 3 eingesetzt und mit der Druckplatte 16 feststehend gekoppelt. Diese Druckplatte 16 steht wiederum feststehend mit der Führungsplatte 22 in Verbindung, so dass diese einer Stellbewegung in Richtung des Pfeiles 14 der Kolbenstange 13 und damit auch der Druckplatte 16 folgt. Des Weiteren sind die beiden Strichmarkierungen 24 und 25 erkennbar.

Für die obere Stützstange 65 ist erkennbar, dass insgesamt fünf Distanzhülsen 71 auf dem Aufnahmeabschnitt 69 der Stützstange 65 angeordnet sind. Zwischen der linken, auf das Montagegewinde 70 aufgeschraubten Montagemutter 9 und der ersten Spannplatte 2 sind bei der dargestellten Einstellung zwei Distanzhülsen 71 vorgesehen, während sich zu den beiden Strichmarkierungen 24 und 25 hin drei weitere Distanzhülsen 71 anschließen. Somit ist der Abstand zwischen der ersten Spannplatte 2 und der zweiten Spannplatte 3 entsprechend auf insgesamt sechs unterschiedliche Distanzen einstellbar. In gleicher Weise sind auch die Distanzhülsen 71 auf der unteren Stützstange 65 angeordnet, so dass die beiden Spannplatten 2 und 3 parallel zueinander ausgerichtet sind.

Des Weiteren ist erkennbar, dass die Tragscheibe 40 in die erste Spannplatte 2 eingesetzt ist. Dabei ist in Fig. 6 die Montageschraube 42 in Phantomlinien erkennbar. In dasselbe Durchgangsgewinde 44 ist von der Seite der zweiten Spannplatte 3 her die Montageschraube 52 zur festsitzenden Halterung der Stützscheibe 50 in der Tragscheibe 40 eingeschraubt. Dabei ist in Fig. 6 eine Schraubenfeder 75 dargestellt, welche mit ihrer bereits zu Fig. 4 beschriebenen Endwindung 60 auf den Zentrierdom 55 der Stützscheibe 50 aufgesetzt ist. Diese Endwindung 60 liegt in der dargestellten Winkelausrichtung mit ihrem Federende 61 am Anschlag 57 des Zentrierdomes 55 an. Die zweite Endwindung 76 wird vom Zentrierdom 19 der Druckplatte 16 aufgenommen, so dass die gesamte Schraubenfeder 75, welche in Fig. 6 verkürzt dargestellt ist, im Wesentlichen konzentrisch zu den beiden Längsmittelachsen 36 und 26 der ersten Spannplatte 2 bzw. der zweiten Spannplatte 3 ausgerichtet ist.

Es ist leicht vorstellbar, dass bei Aktivierung des Hydraulikzylinders 11 die Schraubenfeder 75 durch eine Stellbewegung der Kolbenstange 13 zusammen mit der Druckplatte 16 in Richtung des Pfeiles 14 komprimiert wird und sich somit die Abstände der einzelnen Federwindungen der Schraubenfeder 75 verringern.

Nach Zurücklegen einer gewissen, vorbestimmten Zustellbewegung weisen nun die einzelnen Federwindungen einen verringerten Abstand zueinander auf, welcher es erlaubt, einen Federspanner, wie er in der DE 103 61 597 beschrieben ist, ebenfalls in einer vorbestimmten Winkellage relativ zur Schraubenfeder 75 an dieser anzusetzen. Mit diesem zusätzlichen Federspanner wird die Schraubenfeder 75 "auf Block" gespannt, so dass sie in ein Kraftfahrzeug eingebaut werden kann.

## Patentansprüche

1. Vorspanneinrichtung (1, 1/1) zum Vorspannen einer Schraubenfeder (75), bestehend aus zwei im Abstand voneinander angeordneten und feststehend miteinander in Verbindung stehenden Spannplatten (2, 3), von welchen die erste Spannplatte (2) mit einer Federaufnahme (50) zur Aufnahme der ersten Endwindung (60) der Schraubenfeder (75) versehen ist, und von welchen die zweite Spannplatte (3) eine Presseinrichtung (11) aufweist, welche mit einer axial verstellbaren, eine Federaufnahme (19) aufweisenden Druckplatte (16) zur Aufnahme der zweiten Endwindung (76) der Schraubenfeder (75) versehen ist, wobei die Druckplatte (16) durch die Presseinrichtung (11) relativ zur ersten Spannplatte (2) verstellbar ist,
**dadurch gekennzeichnet,**
**dass** wenigstens eine der Federaufnahmen (50) einen Anschlag (57) aufweist, durch welchen ein Federende (61) einer Endwindung (60) der Schraubenfeder (75) in einer bestimmten Winkelausrichtung in der Federaufnahme (50) aufnehmbar ist und, dass die Federaufnahme (50) in unterschiedlichen Winkelstellungen relativ zur Vorspanneinrichtung (1, 1/1) ausrichtbar und unverdrehbar fixierbar ist.

2. Vorspanneinrichtung nach Anspruch 1, **dadurch gekennzeichnet, dass** die Federaufnahme der ersten Spannplatte (2) als Stützscheibe (50) ausgebildet ist und einen zentralen Zentrierdom (55) aufweist, an welchem die Endwindung (60) der Schraubenfeder (75) ansetzbar ist.

3. Vorspanneinrichtung nach Anspruch 2, **dadurch gekennzeichnet, dass** der Anschlag (57) radial verlaufend an den Zentrierdom (55) angeformt ist.

4. Vorspanneinrichtung nach Anspruch 2 oder 3, **dadurch gekennzeichnet, dass** die Stützscheibe (50) eine zentrale Durchgangsbohrung (56) aufweist.

5. Vorspanneinrichtung nach einem der Ansprüche 2 bis 4, **dadurch gekennzeichnet, dass** die Stützscheibe (5D) über eine feststehend mit der ersten Spannplatte (2) verbindbare Tragscheibe (40) an der ersten Spannplatte auswechselbar montiert ist.

6. Vorspanneinrichtung nach Anspruch 5, **dadurch gekennzeichnet, dass** die Tragscheibe (40) mehrere kreisförmig angeordnete Innengewinde (44, 45, 46, 47) aufweist über welche die Stützscheibe (50) in unterschiedlichen Winkelstellungen mit der Tragscheibe (40) verschraubbar ist.

7. Vorspanneinrichtung nach Anspruch 6, **dadurch gekennzeichnet, dass** wenigstens zwei (44, 45) der Innengewinde als Durchgangsgewinde (44, 45, 46, 47) ausgebildet sind und zur lösbaren Befestigung der Tragscheibe (40) an der ersten Spannplatte (2) dienen.

8. Vorspanneinrichtung nach einem der Ansprüche 1 bis 7, **dadurch gekennzeichnet, dass** die Spannplatten (2, 3) über Stützstangen (4, 5, 6, 65) parallel zueinander verlaufend und im Abstand voneinander miteinander verbunden sind.

9. Vorspanneinrichtung nach Anspruch 8, **dadurch gekennzeichnet, dass** die Stützstangen (65) zur Einstellung des Abstandes der beiden Spannplatten (2, 3) mit Distanzhülsen (71) versehen sind.

## Claims

1. Prestressing device (1, 1/1) for prestressing a helical spring (75), consisting of two clamping plates (2, 3) arranged spaced apart from one another and fixed in relation to one another, of which the first clamping plate (2) is provided with a spring mount (50) for mounting the first end winding (60) of the helical spring (75) and of which the second clamping plate (3) comprises a pressing device (11) provided with an axially adjustable pressure plate (16) comprising a spring mount (19) for mounting the second end winding (76) of the helical spring (75), whereby the pressure plate (16) can be adjusted by the pressing device (11) relative to the first clamping plate (2), **characterised in that** at least one of the spring mounts (50) comprises a stop (57), by means of which one spring end (61) of an end winding (60) of the helical spring (75) can be mounted in a specific angular alignment in the spring mount (50), and **in that** the spring mount (50) can be fixed in an alignable and non-rotatable manner in different angular positions relative to the prestressing device (1, 1/1).

2. Prestressing device according to claim 1, **characterised in that** the spring mount of the first clamping plate (2) is in the form of a support disc (50) and comprises a central centring dome (55) on which the end winding (60) of the helical spring (75) can be placed.

3. Prestressing device according to claim 2, **characterised in that** the stop (57) is formed radially on the centring dome (55).

4. Prestressing device according to claim 2 or 3, **characterised in that** the support disc (50) comprises a central through bore (56).

5. Prestressing device according to one of claims 2 to 4, **characterised in that** the support disc (50) is mounted replaceably on the first clamping plate via a support disc (40) securely connected to the first clamping plate (2).

6. Prestressing device according to claim 5, **characterised in that** the support disc (40) comprises several internal threads (44, 45, 46, 47) arranged in a circle via which the support disc (50) can be screwed in different angular positions to the support disc (40).

7. Prestressing device according to claim 6, **characterised in that** at least two (44, 45) of the internal threads are designed in the form of through threads (44, 45, 46, 47) and are used for detachably securing the support disc (40) on the first clamping plate (2).

8. Prestressing device according to one of claims 1 to 7, **characterised in that** the clamping plates (2, 3) are connected together via support rods (4, 5, 6, 65) parallel to one another and spaced apart from one another.

9. Prestressing device according to claim 8, **characterised in that** the support rods (65) for adjusting the spacing of the two clamping plates (2, 3) are provided with spacing sleeves (71).

## Revendications

1. Dispositif de précontrainte (1, 1/1) conçu pour précontraindre un ressort hélicoïdal (75) et composé de deux platines de serrage (2, 3) qui sont distantes l'une de l'autre, sont en liaison rigide l'une avec l'autre, et parmi lesquelles la première platine de serrage (2) est munie d'un logement (50) destiné à recevoir la première spire d'extrémité (60) du ressort hélicoïdal (75), et la seconde platine de serrage (3) comporte un système de compression (11) pourvu d'une plaquette de pression (16) réglable axialement et dotée d'un logement (19) afin de recevoir la seconde spire d'extrémité (76) dudit ressort hélicoïdal (75), ladite plaquette de pression (16) pouvant être réglée vis-à-vis de la première platine de serrage (2), par l'intermédiaire dudit système de compression (11),
**caractérisé par le fait**
**qu'**au moins l'un (50) des logements du ressort offre une butée (57) par l'intermédiaire de laquelle une extrémité élastique (61) d'une spire d'extrémité (60) du ressort hélicoïdal (75) peut être reçue selon une orientation angulaire déterminée, dans ledit logement (50) ; et
**que** ledit logement (50) du ressort peut être orienté dans différentes positions angulaires par rapport au dispositif de précontrainte (1, 1/1), et peut être bloqué à demeure sans faculté de rotation.

2. Dispositif de précontrainte selon la revendication 1, **caractérisé par le fait que** le logement de ressort de la première platine de serrage (2) est réalisé sous la forme d'un disque d'appui (50), et présente une protubérance centrale de centrage (55) sur laquelle la spire d'extrémité (60) du ressort hélicoïdal (75) peut être engagée.

3. Dispositif de précontrainte selon la revendication 2, **caractérisé par le fait que** la butée (57) fait corps avec la protubérance de centrage (55) et décrit un tracé radial.

4. Dispositif de précontrainte selon la revendication 2 ou 3, **caractérisé par le fait que** le disque d'appui (50) comporte un trou central de passage (56).

5. Dispositif de précontrainte selon l'une des revendications 2 à 4, **caractérisé par le fait que** le disque d'appui (50) est monté sur la première platine de serrage avec faculté de remplacement, par l'entremise d'un disque de support (40) pouvant être relié rigidement à ladite première platine de serrage (2).

6. Dispositif de précontrainte selon la revendication 5, **caractérisé par le fait que** le disque de support (40) comprend plusieurs filetages intérieurs (44, 45, 46, 47) agencés en forme de cercle, par l'intermédiaire desquels le disque d'appui (50) peut être solidarisé par vissage avec ledit disque de support (40), dans différentes positions angulaires.

7. Dispositif de précontrainte selon la revendication 6, **caractérisé par le fait qu'**au moins deux (44, 45), parmi les filetages intérieurs, sont réalisés comme des filetages traversants (44, 45, 46, 47) et servent à la fixation libérable du disque de support (40) sur la première platine de serrage (2).

8. Dispositif de précontrainte selon l'une des revendications 1 à 7, **caractérisé par le fait que** les platines de serrage (2, 3) sont reliées l'une à l'autre par des tiges de soutien (4, 5, 6, 65), avec étendue parallèle et à distance l'une de l'autre.

9. Dispositif de précontrainte selon la revendication 8, **caractérisé par le fait que** les tiges de soutien (65) sont munies de douilles d'espacement (71), en vue de régler la distance entre les deux platines de serrage (2, 3).
